# EUROPEAN PATENT SPECIFICATION

(11) **EP 2 141 758 B1**
(45) Date of publication and mention of the grant of the patent: **13.02.2013**
(21) Application number: 09164340.3
(22) Date of filing: 01.07.2009
(51) Int. Cl.: H01M 2/08, H01M 2/04, H01M 2/36, H01M 10/04

(54) **Sealing Member for an Electrolyte Injection Hole in a Battery, Cap Assembly for a Battery and Method of Fabricating a Secondary Battery**
Dichtung für ein Elektrolyt-Einlassloch in einer Batterie, Kappenanordnung für Batterie und Verfahren zur Herstellung einer Sekundärbatterie
Dispositif d'étanchéité pour trou obturé pour l'injection d'électrolyte dans une batterie, ensamble bouchon destiné à une batterie et procédé de fabrication d'une batterie secondaire

(30) Priority: 03.07.2008 KR 20080064401
(43) Date of publication of application: 06.01.2010
(73) Proprietor: Samsung SDI Co., Ltd., Gyeonggi-do (KR)
(72) Inventor: Seong, Jae-il, Gyeonggi-do (KR); Yoshio, Hideaki, Gyeonggi-do (KR); Joo, Jai-Hwan, Gyeonggi-do (KR); Kim, Jin-Wook, Gyeonggi-do (KR); Woo, Soon-Ki, Gyeonggi-do (KR)
(74) Representative: Walaski, Jan Filip

(56) References cited:
- EP-A- 1 840 985
- WO-A-2007/069820
- JP-A- 2000 243 380
- JP-A- 2001 313 022
- JP-A- 2005 030 483
- US-A1- 2005 221 176

## Description

The present invention relates to a secondary battery having an electrolyte injection hole and a method of fabricating the same, and more particularly, to a secondary battery having an electrolyte injection hole having an improved sealing characteristic so that the electrolyte injection hole is hermetically sealed after electrolyte injection, and a method of fabricating the same.

In recent years, compact and lightweight portable electronic/electlic devices, such as cellular phones, notebook computers, and camcorders, have been actively developed and produced with internal battery packs so that the devices can be operated even in places where there is no power supply. Examples of economical battery packs are a nickel-cadmium (Ni-Cd) battery, a nickel-metal hydride (Ni-MH) battery, and a lithium (Li) battery. A battery pack with a rechargeable secondary battery is generally used.

The Li secondary battery has been widely used in portable electionic/electric devices because of its operating voltage which is three times higher than that of the Ni-Cd battery and the Ni-MH battery and its higher energy density per weight. The Li secondary batteries may be classified into lithium ion batteries using a liquid electrolyte and lithium polymer batteries using a polymer electrolyte depending on types of electrolyte used, or into cylindrical batteries, prismatic batteries, and pouch type batteries depending on their shape.

In general, a battery pack using a lithium secondary battery includes a bare cell inserted into a can having an upper opening, and a protective circuit assembly electrically connected to the bare cell to prevent the bare cell from overcharging or overdischarging. The bare cell includes an electrode assembly that includes a positive electrode plate and a negative electrode plate each having an electrode tab connected to a collector coated with an active material, and a separator disposed between the positive electrode plate and the negative electrode plate; the can; and a cap assembly for sealing the upper opening of the can. The protective circuit assembly includes a protective circuit board for controlling voltage or current when the bare cell is charged or discharged, a lower case formed between the protective circuit board and the bare cell for providing a space where the protective circuit board can be placed, and an upper case coupled to the lower case for protecting the protective circuit board from external impact.

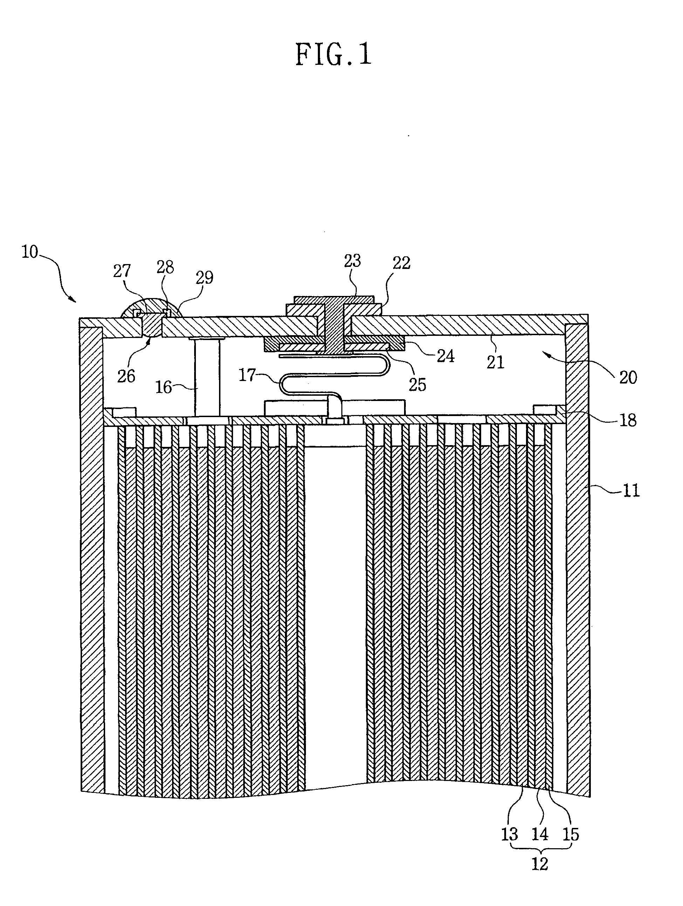

FIG. 1 is a cross-sectional view of a conventional secondary battery including an electrolyte injection hole.

Referring to FIG. 1, a secondary battery 10 includes a can 11, an electrode assembly 12 accommodated in the can 11, and a cap assembly 20 coupled to the can 11.

The electrode assembly 12 includes a positive electrode 13, a separator 14, and a negative electrode 15 which are sequentially wound. A positive electrode tab 16 and a negative electrode tab 17 are drawn from the positive electrode 13 and the negative electrode 15, respectively.

Meanwhile, an insulating case 18 is provided on the electrode assembly 12 to electrically insulate the electrode assembly 12 from the cap assembly 20 and cover an upper portion of the electrode assembly 12.

The cap assembly 20 includes a cap plate 21 coupled to an upper portion of the can 11, an electrode terminal 23 insulated from the cap plate 21 via a gasket 22, an insulating plate 24 provided on a lower surface of the cap plate 21, and a terminal plate 25 provided on a lower surface of the insulating plate 24 and electrically connected to the electrode terminal 23.

The positive electrode tab 16 is electrically connected to the cap plate 21, and the negative electrode tab 17 is electrically connected to the electrode terminal 23 through the terminal plate 25.

The cap plate 21 includes an electrolyte injection hole 26 as a passage for injecting an electrolyte into the can 11, and a sealing member 27 is coupled to the electrolyte injection hole 26.

The sealing member 27 normally is an aluminum ball pressed into the electrolyte injection hole 26 by a press device. After the ball is pressed into the electrolyte injection hole 26, laser welding is performed to form a welded portion 28 along a boundary between the ball and the cap plate 21. Accordingly, the electrolyte injection hole 26 is sealed. The process of sealing the electrolyte injection hole is completed by performing a UV hardening process to coat the periphery of the electrolyte injection hole including the welded portion and the sealing member with a UV hardener.

However, in the sealing structure of the conventional electrolyte injection hole, the ball pressed into the electrolyte injection hole cannot be located accurately. This reduces a sealing force for the electrolyte injection hole, causing leakage of the electrolyte injected into the can.

In addition, since an upper surface of the ball cannot be exactly rounded, the welded portion may not be correctly formed along the boundary between the pressed ball and the cap plate, causing leakage of the electrolyte. In particular, in the sealing structure of the conventional electrolyte injection hole having the welded portion, when the electrolyte in the can leaks through the electrolyte injection hole in a welding process, the leaked electrolyte causes a pin hole to be formed between the ball and an inner circumference of the electrolyte injection hole 26. This degrades a sealing characteristic of the electrolyte injection hole.

EP 1 840 985 and US2005/0221176 disclose secondary batteries with sealing means for the electrolyte injection hole in the cap plate. JP2005 030483 discloses a sealing ring for providing sealing against a rotating shaft, such as in an automatic gearbox.

An aspect of the present invention provides a secondary battery having an electrolyte injection hole having an improved sealing characteristic.

Another aspect of the present invention provides a secondary battery having high productivity by eliminating the need for a cap welding process.

Yet another aspect of the present invention provides a secondary battery capable of suppressing formation of a pin hole by eliminating the need for a welding process.

According to the present invention, there is provided a cap assembly for a battery according to claim 1 and a method of fabricating a secondary battery according to claim 14.

According to an embodiment of the present invention, a member for sealing an electrolyte injection hole includes a cap and a resin coated on an outer circumference of the cap. The resin may have a coating thickness of 1.75µm to 20µm. Preferably, the coating thickness of the resin may be 6µm to 10µm. The resin may be a polyimide series resin, a fluorine series resin, or a natural-rubber series resin. Preferably, the resin may be a polyimide series resin.

According to another embodiment of the present invention, a cap assembly has a cap plate, the cap plate includes an electrolyte injection hole, the electrolyte injection hole includes an upper tapered portion, and the tapered portion has a surface roughness.

According to yet another embodiment of the present invention, a secondary battery has a cap assembly, the cap assembly includes a cap plate including an electrolyte injection hole, the electrolyte injection hole includes an upper tapered portion, and the tapered portion has a surface roughness. The tapered portion may be formed such that a size of the electrolyte injection hole is reduced from an upper surface of the cap plate to a lower surface thereof. The tapered portion may have a depth corresponding to 37.5% to 62.5% of the thickness of the cap plate. The tapered portion may have an inner angle of 43 to 68°.

The tapered portion may have a taper angle of 56 to 69° with respect to the lower surface of the cap plate.

The tapered portion may have a surface roughness of 1µm to 17µm. Preferably, the tapered portion may have a surface roughness of 5µm to 11µm.

The secondary battery may further include a sealing member located in the electrolyte injection hole to seal the electrolyte injection hole.

The predetermined portion of the resin contacted with and pressed on the tapered portion of the electrolyte injection hole may have a coating thickness corresponding to 40 to 60% of the coating thickness prior to sealing the electrolyte injection hole.

The secondary battery may further include a UV hardening layer coated on the periphery of the electrolyte injection hole including the sealing member.

According to yet another embodiment of the present invention, a method of fabricating a secondary battery includes preparing a bare cell by injecting an electrolyte into the bare cell finished with a cap plate, through an electrolyte injection hole; locating a sealing member on the electrolyte injection hole; and pressing the sealing member into the electrolyte injection hole using a press device, wherein the electrolyte injection hole includes an upper tapered portion having a surface roughness, and the sealing member includes a cap and a resin coated on an outer circumference of the cap.

The sealing member may be pressed into the electrolyte injection hole using a press force of 50N to 190N. Preferably, the sealing member may be pressed into the electrolyte injection hole using a press force of 90N to 150N.

The predetermined portion of the resin contacted with and pressed on the tapered portion of the electrolyte injection hole may have a coating thickness corresponding to 40 to 60% of the coating thickness prior to sealing the electrolyte injection hole.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings in which:
FIG. 1 is a cross-sectional view of a conventional secondary battery including an electrolyte injection hole;FIG. 2A is a cross-sectional view of a secondary battery having an electrolyte injection hole according to an exemplary embodiment of the present invention;
FIG. 2B is an enlarged cross-sectional view of region A of FIG. 2A;
FIG. 3A is a cross-sectional view of a sealing member according to the present invention;
FIG. 3B is a cross-sectional view illustrating a structure of an electrolyte injection hole according to the present invention;
FIGS. 4A to 4C are cross-sectional views illustrating a method of sealing a electrolyte injection hole according to the present invention;
FIGS. 5A to 5F are schematic diagrams illustrating a method of forming an electrolyte injection hole according to the present invention;
FIG. 6 is a graph of leak pressure versus surface roughness of a tapered portion of an electrolyte injection hole;
FIG. 7 is a graph of leak pressure versus depth of a tapered portion of an electrolyte injection hole;
FIG. 8A is a graph of leak pressure when a fluorine series resin is used;
FIG. 8B is a graph of leak pressure when a polyimide series resin is used;
FIG. 8C is a graph of leak pressure when a natural-rubber series resin is used;
FIG. 9 is a graph of leak pressure versus coating thickness of a resin coated on a cap of a sealing member; and
FIG. 10 is a graph of leak pressure versus press force of a sealing member.

Reference will now be made in detail to the present embodiments of the present invention, examples of which are shown in the accompanying drawings, wherein like reference numerals refer to like elements throughout the specification. The embodiments are described below in order to explain the present invention by referring to the figures.

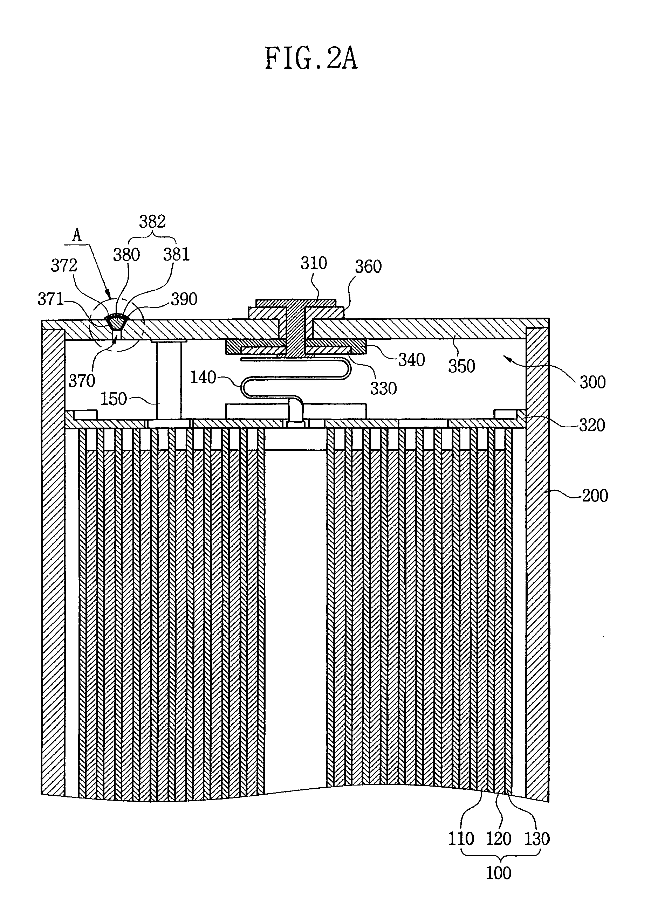

FIG. 2A is a cross-sectional view of a secondary battery having an electrolyte injection hole according to an exemplary embodiment of the present invention, and

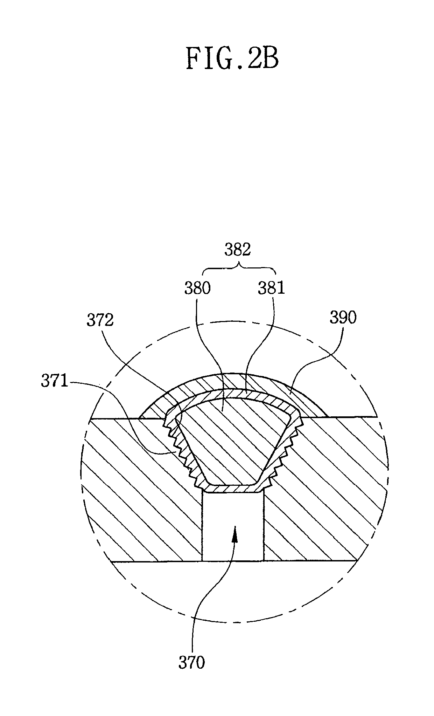

FIG. 2B is an enlarged cross-sectional view of region A of FIG. 2A.

Referring to FIGS. 2A and 2B, the secondary battery having an electrolyte injection hole according to the present invention may include: a bare cell including an electrode assembly 100, a can 200 for accommodating the electrode assembly 100 and an electrolyte, and a cap assembly 300; and a protective circuit board (not shown) coupled to the bare cell for controlling voltage or current when the bare cell is charged or discharged.

The electrode assembly 100 includes a thin plate- or film-shaped stack of a positive electrode 110, a separator 130, and a negative electrode 120, which is wound into a spiral.

The prismatic can 200 is formed of aluminum or an aluminum alloy in a substantially parallelepiped shape. The electrode assembly 100 is accommodated in the can 200 through its upper opening of the can 200, which serves as a receptacle for the electrode assembly 100 and the electrolyte.

The cap assembly 300 includes a flat cap plate 350 having a size and shape corresponding to the upper opening of the can 200. The cap plate 350 includes a via hole through which an electrode terminal passes. The cap assembly 300 further includes a tube-shaped gasket 360 provided outside the electrode terminal 310 passing through the cap plate 350, for electrically insulating between the electrode terminal 310 and the cap plate 350.

That is, the cap assembly 300 includes the cap plate 350 for closing the opening through which the electrode assembly 100 is inserted into the can 200, and the electrode terminal 310 insulated from the cap plate 350 by the gasket 360.

The cap assembly 300 further includes an insulating plate 340 disposed at a center of the cap plate 350 and under the cap plate 350 around the via hole, and a terminal plate 330 provided below the insulating plate 340.

A positive electrode tab 150 drawn from the positive electrode 110 is welded to the lower surface of the cap plate 350, and a negative electrode tab 140 drawn from the negative electrode 120 is folded in a zigzag shape and welded to a lower end of the electrode terminal 310.

Meanwhile, an insulating case 320 is provided on the electrode assembly 100 to electrically insulate the electrode assembly 100 from the cap assembly 300 and cover an upper portion of the electrode assembly 100. The insulating case 320 is made of an insulating polymer resin that is preferably polypropylene. The insulating case 320 may have a via hole through which the negative electrode tab 140 or the electrolyte can pass.

The cap plate 350 further includes an electrolyte injection hole 370 formed at one side thereof. A sealing member 382 is provided at the electrolyte injection hole 370 to seal the electrolyte injection hole after the electrolyte is injected.

In this case, the electrolyte injection hole 370 includes an upper tapered portion 371 having a surface roughness 372 of a predetermined size. In other words, the surface is roughened. The sealing member 382 includes a cap 380 and a resin 381 coated on an outer circumference of the cap 380.

A UV hardening process is performed to form a UV hardening layer 390 by coating the periphery of the electrolyte injection hole including the sealing member 382 with a UV hardener, thereby improving the sealing characteristic of the electrolyte injection hole.

Structures of the sealing member and the electrolyte injection hole according to the present invention will now be described in detail.

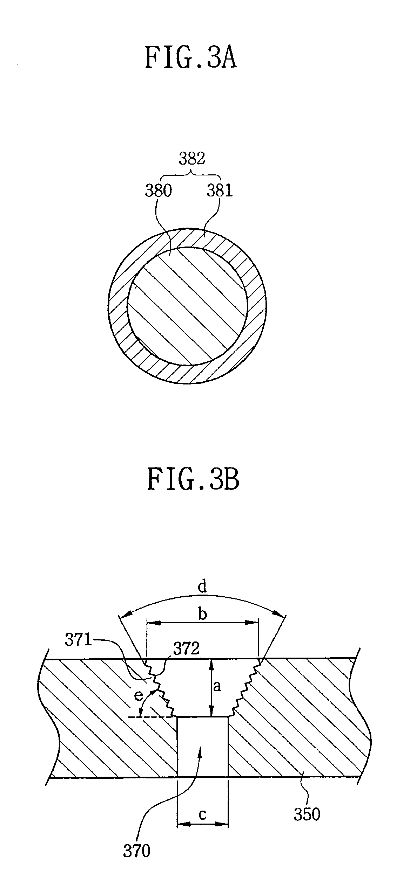

FIG. 3A is a cross-sectional view of a sealing member according to the present invention, and FIG. 3B is a cross-sectional view illustrating a structure of the electrolyte injection hole according to the present invention.

Referring to FIG. 3A, the sealing member 382 according to the present invention includes a cap 380 and a resin 381 coated on an outer circumference of the cap 380.

The sealing member 382 may be made of aluminum, an aluminum alloy, plastic, or stainless steel in a ball shape or a pin shape.

In the present invention, preferably, the cap may be made of aluminum for improving a sealing characteristic with the electrolyte injection hole in subsequently pressing the sealing member into the electrolyte injection hole. Preferably, the cap has a ball shape in order to improve a coating characteristic in coating the cap with resin.

When the cap has a ball shape, it may have a size varying with the size of the electrolyte injection hole. In the present process, the cap has a diameter of 0.9 to 1.3mm, but the present invention is not limited thereto.

The resin 381 is provided for improving a sealing characteristic between the electrolyte injection hole and the cap in subsequently pressing the sealing member into the electrolyte injection hole. The resin 381 may be a polyimide series resin, a fluorine series resin, or a natural-rubber series resin. The natural-rubber series resin may include butadiene rubber (BR), isobutylene-isoprene rubber (IIR), or ethylene propylene diene monomer (EPDM) rubber.

Preferably, the resin 381 in the present invention may be a polyimide series resin or a fluorine series resin for improving a sealing force between the electrolyte injection hole and the sealing member. More preferably, the resin 381 may be a polyimide series resin, as described above.

A coating thickness of the resin 381 may be 1.75µm to 20µm, and more preferably, 6µm to 10µm. When the coating thickness is less than 1.75µm, the leak pressure required in the present invention is not satisfied. The upper limit of the coating thickness, 20µm, is determined because a thickness exceeding 20µm cannot be fabricated by a recent fabrication process. Although the thickness exceeding 20µm may be fabricated, the sealing force is reduced due to an increase in total size of the sealing member.

In this case, the "leak pressure" refers to a pressure applied to the inside of the battery when the electrolyte leaks through the electrolyte injection hole. For example, a leak pressure of 3kgf/cm² means that when a pressure of 3kgf/cm² or more is applied to the inside of the battery, the electrolyte has leaked through the electrolyte injection hole.

Referring to FIG. 3B, the electrolyte injection hole 370 according to the present invention includes an upper tapered portion 371, which has a surface roughness 372 of a predetermined size, and a non-tapered portion that extends therefrom.

In this case, the tapered portion is formed so that the size of the electrolyte injection hole is reduced from the upper surface of the cap plate to the lower surface thereof, as shown in FIG. 3B. The tapered portion is also formed to have a depth from the upper surface of the cap plate to a predetermined thickness of the cap plate.

The cap plate may have a thickness varying with the type of the battery. In the present process, the thickness is about 0.7 to 1.0mm, but the present invention is not limited thereto.

In the present invention, the depth of the tapered portion extending from the upper surface of the cap plate to the predetermined thickness thereof is defined as "a depth of the tapered portion" ("a" in FIG. 3B).

The depth of the tapered portion may be formed to 37.5% to 62.5% of the thickness of the cap plate. The depth of the tapered portion below 37.5% or above 62.5% does not satisfy the leak pressure requirement in the present invention, so that it is not preferable.

In the present invention, the electrolyte injection hole 370 has different upper and lower diameters. In this case, the upper diameter ("b" in FIG. 3B) ranges from 1.1mm to 1.5mm and the lower diameter ("c" in FIG. 3B) ranges from 0.7mm to 1.1mm, so that the upper diameter may be larger than the lower diameter.

However, if the upper diameter of the electrolyte injection hole is too small, electrolyte injection is difficult, and if the upper diameter is too large, the electrolyte injection is easy, but subsequent sealing of the electrolyte injection hole is difficult. Accordingly, the above optimal range of the upper diameter of the electrolyte injection hole is derived, and the present invention is not limited thereto.

If the lower diameter of the electrolyte injection hole is too small, the electrolyte injection is difficult. If the lower diameter is too large, the electrolyte injection is easy, but it may cause an increase in the upper diameter, which makes it difficult to subsequently seal the electrolyte injection hole and facilitates the leakage of the injected electrolyte. Accordingly, the above optimal range of the lower diameter of the electrolyte injection hole is derived, and the present invention is not limited thereto.

As described above, in the present invention, the depth of the tapered portion may be formed to 37.5 to 62.5% of the thickness of the cap plate. An angle ("d" in FIG. 3B) between the left tapered portion and the right tapered portion with reference to the cross-sectional view of FIG. 3B may be about 43 to 68°.

Accordingly, if angles ("e" in FIG. 3B) of the left tapered portion and the right tapered portion with respect to the lower surface of the cap plate are the same, the taper angle may be about 56 to 69° with respect to the lower surface of the cap plate.

In the present invention, the angle d between the left tapered portion and the right tapered portion is defined as "an inner angle of the tapered portion" and the angle e of the tapered portion with respect to the lower surface of the cap plate is defined as "a taper angle."

In this case, the inner angle d of the tapered portion is calculated from the thickness of the cap plate, the upper and lower diameters of the electrolyte injection hole, and the preferred depth of the tapered portion in the present invention. For example, when the thickness of the cap plate is 0.8mm, the upper diameter b of the electrolyte injection hole is 1.3mm, the lower diameter c of the electrolyte injection hole is 0.9mm, and the depths a of the tapered portion are 0.3mm, 0.4mm and 0.5mm corresponding to 37.5%, 50% and 62.5% of the thickness of the cap plate, the inner angles d of the tapered portion are about 43°, 53°, and 68° depending on the depths a of the tapered portion.

The tapered portion 371 has a surface roughness 372 of a predetermined size. The surface roughness 372 can increase a friction force and an adhesion force between the sealing member and the resin in sealing the electrolyte injection hole using the sealing member in a subsequent process, and effectively prevent the leakage of the injected electrolyte using a long leak path, which is a path of the leaked electrolyte along the surface of the electrolyte injection hole.

Preferably, the tapered portion 371 has a surface roughness of 1µm to 17µm, and more preferably, 5µm to 11µm. A surface roughness below 1µm or above 17µm does not satisfy a leak pressure requirement in the present invention, so that it is not preferable.

A method of sealing the electrolyte injection hole according to the present invention will now be described in detail.

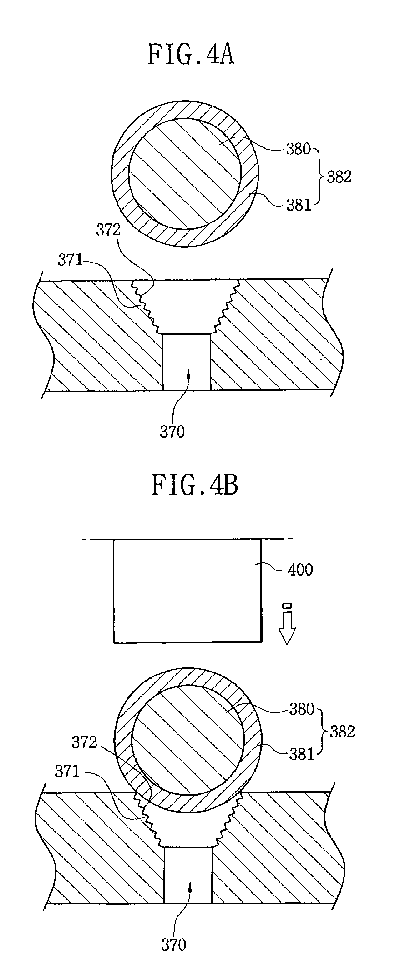

FIGS. 4A to 4C are cross-sectional views illustrating a method of sealing an electrolyte injection hole according to the present invention.

Referring to FIG. 4A, a cap plate including a sealing member and an electrolyte injection hole according to the present invention is prepared.

In this case, the cap plate including the electrolyte injection hole refers to a cap plate of a bare cell, which includes an electrode assembly inserted into a can through an opening thereof, and closes the opening after an electrolyte is injected into the bare cell finished with the cap plate through the electrolyte injection hole, as in FIG. 2A.

The sealing member 382 includes a cap 380, and a resin 381 coated on an outer circumference of the cap 380. The electrolyte injection hole 370 includes an upper tapered portion 371 having a surface roughness 372 of a predetermined size.

The sealing member and the electrolyte injection hole have the same structure as described above, and thus, a detailed description thereof will be omitted herein.

Referring to FIG. 4B, the sealing member 382 is placed on the electrolyte injection hole 370, and pressed into the electrolyte injection hole 370 by a press device 400.

In this case, the upper surface of the electrolyte injection hole 370 is larger than a conventional one, so that the sealing member can be more accurately located on the electrolyte injection hole.

The sealing member may be pressed by a press force of 50N to 190N of the press device. A press force below 50N or above 190N does not satisfy the leak pressure requirement in the present invention. More preferably, the press force is 90N to 150N.

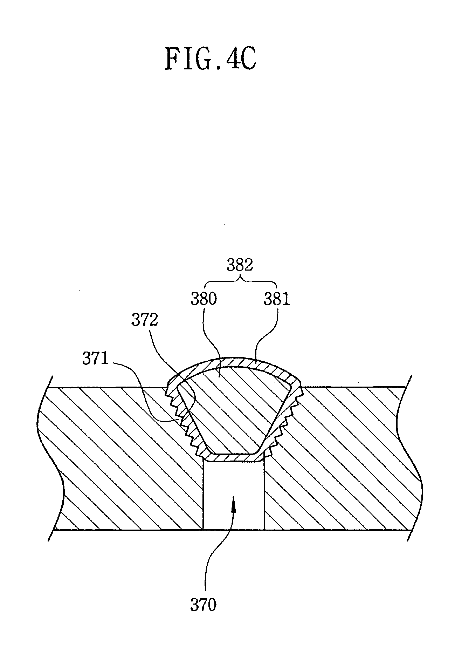

Referring to FIG. 4C, the sealing member pressed by the press device is deformed to fill the inner circumference of the electrolyte injection hole and seal the electrolyte injection hole.

In this case, the friction force and the adhesion force of the resin layer 381 of the sealing member 382 are increased by the surface roughness 372 of the tapered portion 371 of the electrolyte injection hole. This results in an improved sealing characteristic of the electrolyte injection hole.

That is, a predetermined portion of the resin layer of the sealing member is contacted with and pressed on the surface roughness of the tapered portion, thereby improving the sealing characteristic. In this case, the predetermined portion of the resin layer of the sealing member contacted with and pressed on the surface roughness of the tapered portion is brought into contact with the tapered portion, with the thickness reduced by about 40 to 60% from the initial coating thickness.

In addition, a UV hardening process is performed to form a UV hardening layer 390 as shown in FIG. 2B, by coating the periphery of the electrolyte injection hole including the sealing member 382 with a UV hardener. This further improves the sealing characteristic of the electrolyte injection hole.

A method of forming an electrolyte injection hole according to the present invention will now be described in detail.

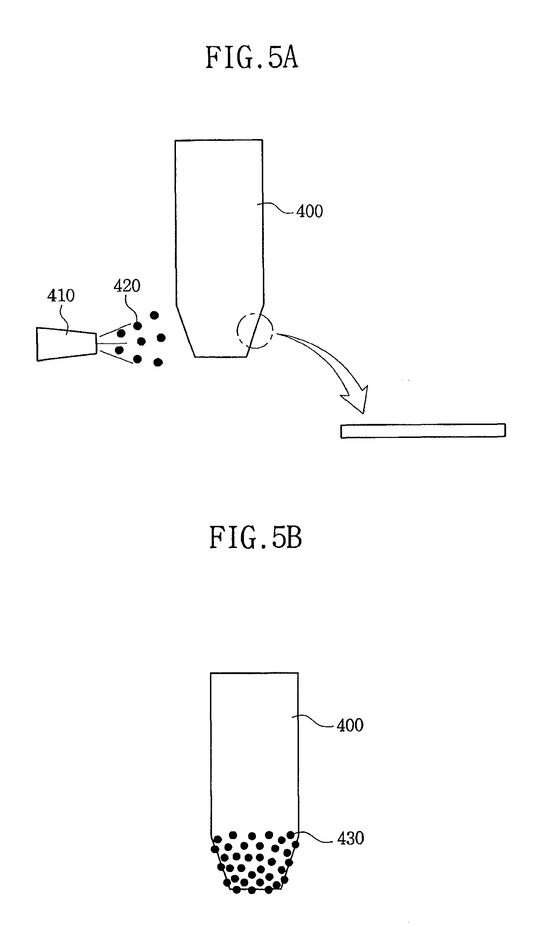

FIGS. 5A to 5F are schematic diagrams illustrating a method of forming an electrolyte injection hole according to the present invention.

Referring to FIG. 5A, a press punch 400 having a lower tapered portion formed at a predetermined angle is prepared, and diamonds 420 of a predetermined size are sprayed to the tapered portion of the press punch 400 using a sprayer 410.

In this case, the angle of the tapered portion of the electrolyte injection hole can be adjusted with the angle of the tapered portion of the press punch, and the surface roughness value of the tapered portion of the electrolyte injection hole can be adjusted with the size and amount of the diamonds.

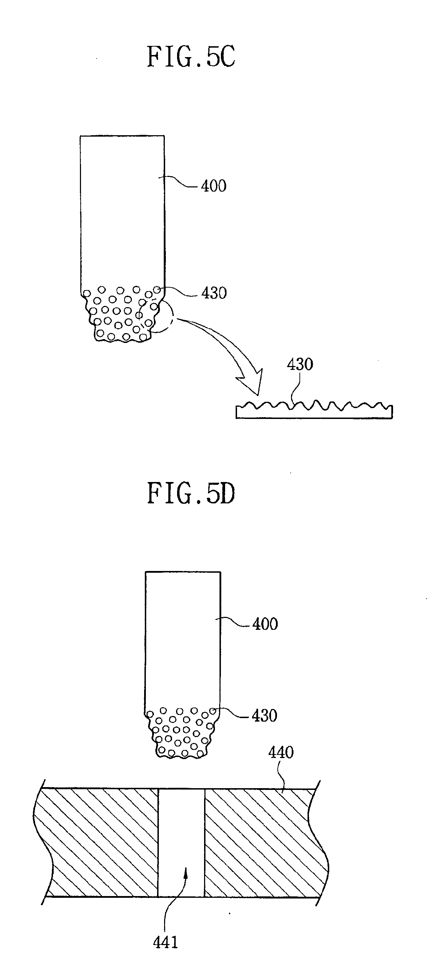

Referring to FIG. 5B, the diamonds are stuck to the tapered portion of the press punch 400. Referring to FIG. 5C, the stuck diamonds are removed to form a predetermined surface roughness 430 on the tapered portion of the press punch.

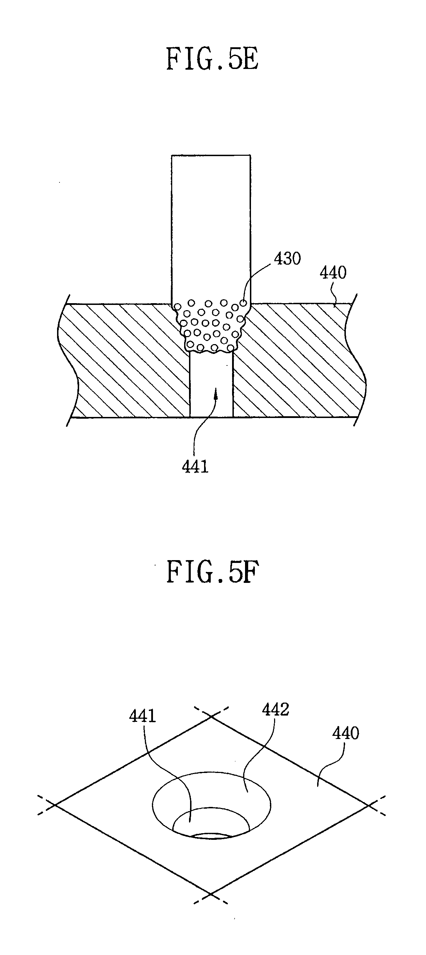

Referring to FIGS. 5D and 5E, a cap plate 440 having an electrolyte injection hole 441 is prepared and the press punch 400 having the predetermined surface roughness 430 on its tapered portion as shown in FIG. 5C is inserted into the electrolyte injection hole to form the tapered portion 442 on the electrolyte injection hole 441 as shown in FIG. 5F. Although not shown in FIG. 5F, a surface roughness may be formed on the tapered portion 442.

While the tapered portion is shown in FIG. 5D as being not formed in the electrolyte injection hole, the tapered portion may be formed in an upper portion of the electrolyte injection hole in advance and then the press punch having a predetermined surface roughness may be inserted into the electrolyte injection hole to form the surface roughness.

A leak pressure representing a sealing characteristic when the electrolyte injection hole is sealed by the sealing member according to the present invention will now be described in detail.

As described above, "leak pressure" refers to a pressure applied to the inside of the battery when the electrolyte leaks through the electrolyte injection hole. For example, a leak pressure of 3kgf/cm2 means that the electrolyte leaks through the electrolyte injection hole when a pressure of 3kgf/cm2 or more is applied to the inside of the battery. In other words, the leak pressure is the maximum pressure that the battery can withstand before electrolyte begins to leak through the injection hole.

In the present process, the leak pressure requirement is 3kgf/cm2 or more. When the leak pressure is 7kgf/cm2 or more, it indicates a very stable state in which the electrolyte is unlikely to leak.

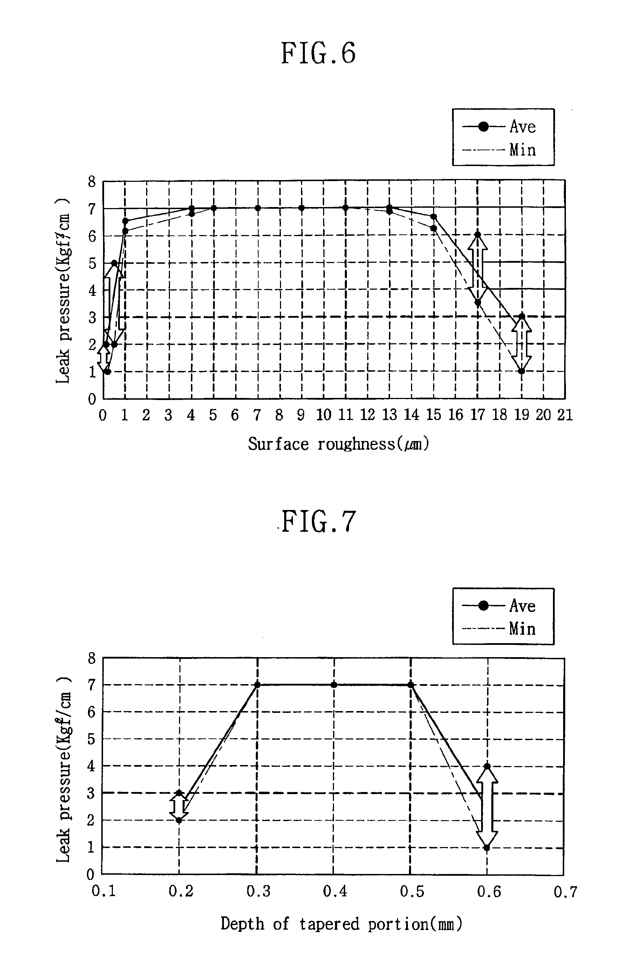

FIG. 6 is a graph of leak pressure versus surface roughness of a tapered portion of an electrolyte injection hole.

As shown in FIG. 6, when the surface roughness of the tapered portion is 1µm, an average value of the leak pressure is about 6.5kgf/cm2 and a minimum value thereof is about 6.2kgf/cm2, and when the surface roughness of the tapered portion is 17µm, the average value of the leak pressure is about 4.5kgf/cm2 and the minimum value is about 3.5kgf/cm2.

When the surface roughness of the tapered portion is 5µm to 11µm, a very excellent sealing characteristic is obtained in which each of the average value and the minimum value of the leak pressure is 7kgf/cm. In this case, the average value and the minimum value of the leak pressure is constant at the surface roughness ranging from 5µm to 11µm because a maximum pressure of 7kgf/cm2 is applied to the inside of the battery. The electrolyte may not leak even under a certain pressure exceeding 7kgf/cm2.

However, when the surface roughness of the tapered portion is 0.5µm, the average value of the leak pressure is about 4kgf/ cm2, but the minimum value is about 2kgf/cm2, the latter of which does not satisfy the leak pressure requirement of 3kgf/ cm2. This results in a poor sealing characteristic.

When the surface roughness is not formed on the tapered portion, the average value of the leak pressure is about 2kgf/cm2 and the minimum value is about 1kgf/cm2, neither of which satisfies the leak pressure requirement of 3kgf/cm2. This results in a poor sealing characteristic.

When the surface roughness of the tapered portion is 19µm, the average value of the leak pressure is about 2.5kgf/cm2 and the minimum value is about 1kgf/cm2, neither of which satisfies the leak pressure requirement of 3kgf/cm2. This results in a poor sealing characteristic.

In this case, reduction of the leak pressure as the surface roughness of the tapered portion exceeds 17µm may be because a friction force and an adhesion force are reduced as a contact area of the sealing member with the resin is reduced due to the high roughness.

Thus, in the present invention, the surface roughness of the tapered portion preferably is 1µm to 17µm, and more particularly, 5µm to 11µm.

FIG. 7 is a graph of leak pressure versus depth of a tapered portion of an electrolyte injection hole.

In this case, the leak pressure was measured when the thickness of the cap plate was 0.8mm and the depths of the tapered portion were 0.2mm, 0.3mm, 0.4mm, 0.5mm, and 0.6mm.

As shown in FIG. 7, when the depths of the tapered portion are 0.3mm, 0.4mm, and 0.5mm corresponding to 37.5%, 50%, and 62.5% of the thickness of the cap plate, respectively, a very excellent sealing characteristic is obtained in which each of the average value and the minimum value of the leak pressure is 7kgf/cm2. In this case, both the average value and the minimum value of the leak pressure are 7kgf/cm2 as a constant value when the depths of the tapered portion range from 37.5% to 62.5% of the thickness of the cap plate because a maximum pressure of 7kgf/cm2 is applied to the inside of the battery. The electrolyte may not leak even under a certain pressure exceeding 7kgf/cm2.

However, it can be seen that when the depth of the tapered portion is 0.2mm corresponding to 25% of the thickness of the cap plate, the average value of the leak pressure is about 2.5kgf/cm2 and the minimum value is about 2kgf/cm2, neither of which satisfies the leak pressure requirement of 3kgf/cm2. This results in a poor sealing characteristic.

It can also be seen that when the depth of the tapered portion is 0.6mm corresponding to 75% of the thickness of the cap plate, the maximum value of the leak pressure is about 4kgf/cm2, but the average value is about 2.52kgf/cm2 and the minimum value is about 2kgf/cm2, neither of which satisfies the leak pressure requirement of 3kgf/cm2. This results in a poor sealing characteristic.

Thus, in the present invention, the depth of the tapered portion is preferably 37.5% to 62.5% of the thickness of the cap plate.

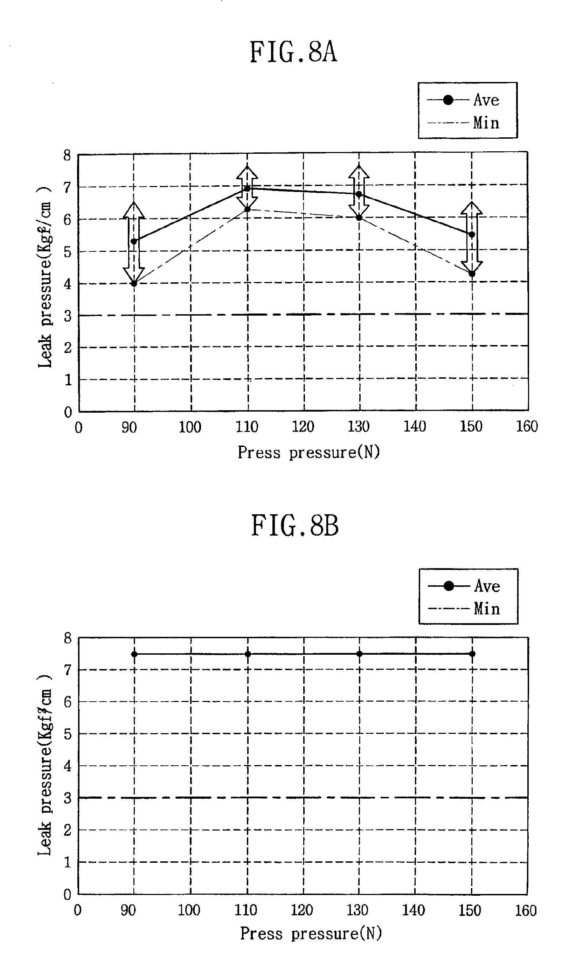

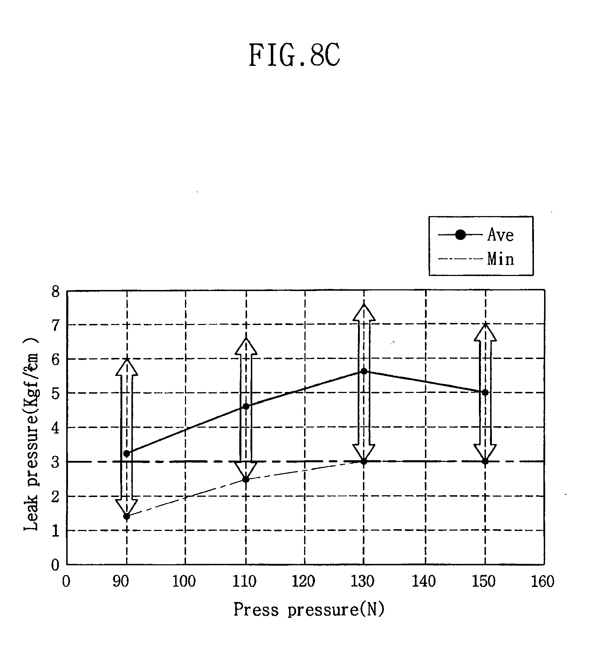

FIGS. 8A to 8C are graphs of leak pressure depending on types of the resin coated on the cap of the sealing member. FIG. 8A is a graph of leak pressure when a fluorine series resin is used, FIG. 8B is a graph of leak pressure when a polyimide series resin is used, and FIG. 8C is a graph of leak pressure in which the resin is a natural-rubber series resin (ethylene propylene diene monomer (EPDM) rubber).

In this case, the leak pressure of each resin was measured with the press pressure varying from 90N to 150N.

It can be seen from FIG. 8A that the fluorine series resin provides an excellent sealing characteristic under a press pressure ranging from 110N to 130N, in which each of the average value and the minimum value of the leak pressure is 6kgf/cm2 or more.

It can also be seen that when the press pressure is 90N, the average value of the leak pressure is about 5.3kgf/cm2 and the minimum value is about 4kgfv, and when the press pressure is 150N, the average value of the leak pressure is about 5.5kgf/cm2 and the minimum value is about 4.2kgf/cm2.

Thus, it can be seen that the fluorine series resin provides an excellent sealing characteristic under a press pressure ranging from 90N to 150N, in which each of the average value and the minimum value of the leak pressure is maintained at 3kgf/cm2 or more.

It can be seen from FIG. 8B that the polyimide series resin provides a very excellent sealing characteristic under a press pressure ranging from 110N to 130N, in which each of the average value and the minimum value of the leak pressure is 7.5kgf/cm2.

In this case, the average value and the minimum value of the leak pressure are 7.5kgf/cm2 as a constant value when the press pressure ranges from 110N to 130N because a maximum pressure of 7.5kgf/cm2 is applied to the inside of the battery. The electrolyte may not leak even under a certain pressure exceeding 7.5kgf/cm2.

It can also be seen from FIG. 8C that the natural-rubber series resin (ethylene propylene diene monomer (EPDM) rubber) provides an excellent sealing characteristic under the press pressure ranging from 130N to 150N, in which each of the average value and the minimum value of the leak pressure is 3kgf/cm2 or more.

However, when the press pressure is 110N, the average value of the leak pressure is about 4.6kgf/cm2 and the minimum value is about 2.5kgf/cm2, and when the press pressure is 90N, the average value of the leak pressure is about 3.2kgf/cm2 and the minimum value is about 1.4kgf/cm2, which does not satisfy the leak pressure requirement of 3kgf/cm2. This results in a poor sealing characteristic.

Thus, in the present invention, the resin is preferably a polyimide series resin or a fluorine series resin in order to improve a sealing force between the electrolyte injection hole and the sealing member. More preferably, the resin is a polyimide series resin.

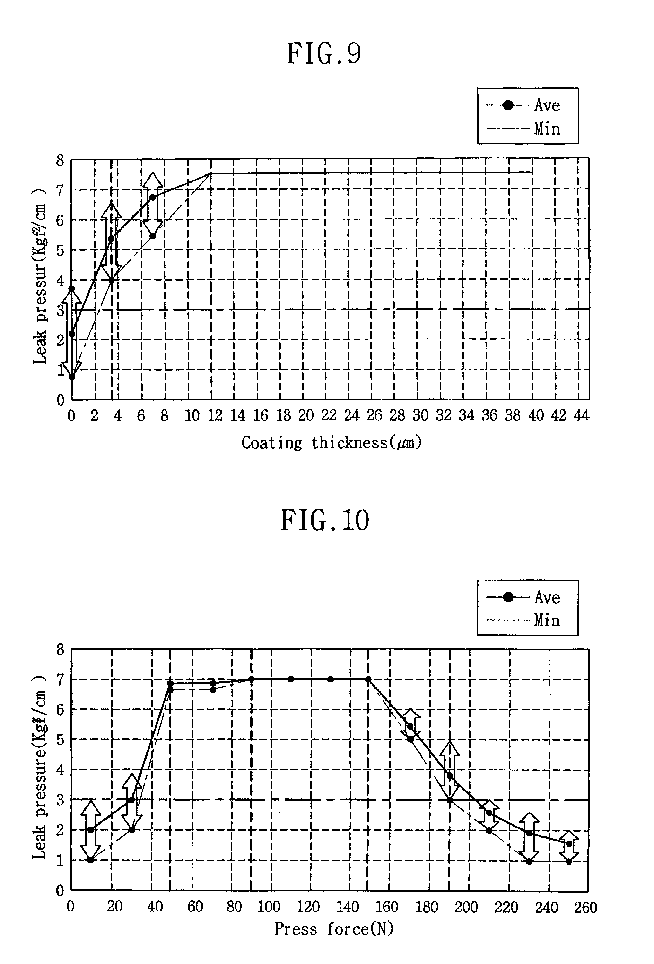

FIG. 9 is a graph of leak pressure versus coating thickness of the resin coated on the cap of the sealing member.

In this case, the coated resin was a polyimide series resin, and the coating thickness of FIG. 9 is, for example, a total coating thickness of the left and right resins or a total coating thickness of the upper and lower resins with reference to the cross-sectional view illustrating the sealing member of FIG. 3A, i.e., a total thickness of the resin coated at both sides of the sectional surface of the cap.

It can be seen from FIG. 9 that the total thickness of the resin coated at both sides of the sectional surface of the cap being 3.5µm (i.e., the coating thickness of the resin being 1.75µm) provides an excellent sealing characteristic, in which the average value of the leak pressure is about 5.3kgf/cm2 and the minimum value is 4kgf/cm2. In particular, the total thickness of the resin coated at both sides of the sectional surface of the cap being 12µm to 40µm (i.e., the coating thickness of the resin of 6µm to 20µm) provides a very excellent sealing characteristic, in which each of the average value and the minimum value of the leak pressure is 7.5kgf/cm2 as a constant value. In this case, both the average value and the minimum value of the leak pressure are 7kgf/cm2 as a constant value at the total thickness of the coated resin ranging from 12µm to 40µm because a maximum pressure of 7.5 kgf/cm2 is applied to the inside of the battery. A certain pressure exceeding 7.5kgf/cm2 may not cause leakage of the electrolyte.

However, it can be seen that when the total thickness of the resin coated at both sides of the sectional surface of the cap is 2µm (i.e., the coating thickness of the resin is 1µm), the average value of the leak pressure is about 4kgf/cm2 and the minimum value is about 2.7kgf/cm2, the latter of which does not satisfy the leak pressure requirement of 3kgf/cm2. This results in a poor sealing characteristic.

When no resin is coated, the average value of the leak pressure is about 2.2kgf/cm2 and the minimum value is about 0.8kgf/cm2, neither of which satisfies the leak pressure requirement of 3kgf/cm2. This results in a poor sealing characteristic.

Thus, the coating thickness of the resin in the present invention is preferably 1.75µm to 20µm. More preferably, the coating thickness is 6µm to 10µm. The upper limit of the coating thickness is limited to 20µm because a recent fabrication process cannot fabricate a thickness exceeding 20µm. The thickness exceeding 20µm may be fabricated, but the sealing force is reduced due to an increase in the total size of the sealing member.

FIG. 10 is a graph of leak pressure versus press force (press pressure) of the sealing member.

In this case, the cap of the sealing member was formed of aluminum in a ball shape, the size of the cap was 1.1ϕ, and the size of the sealing member was 1.13ϕ as the cap is coated with a polyimide series resin.

Also, the thickness of the cap plate was 0.8mm, the upper diameter b of the electrolyte injection hole was 1.3mm, the lower diameter c of the electrolyte injection hole was 0.9mm, the depth a of the tapered portion was 0.4mm corresponding to 50% of the thickness of the cap plate, and the surface roughness value of the tapered portion was 10µm.

It can be seen from FIG. 10 that when the press force is 50N, the average value of the leak pressure is about 7.8kgf/cm2 and the minimum value is about 7.6kgf/cm2, and when the press pressure is 190N, the average value of the leak pressure is about 3.8kgf/cm2 and the minimum value is about 3kgf/cm2.

The press force ranging from 90N to 150N provides a very excellent sealing characteristic, in which each of the average value and the minimum value of the leak pressure is 7kgf/cm2.

In this case, both the average value and the minimum value of the leak pressure are 7kgf/cm2 as a constant value under the press force ranging from 90N to 150N because a maximum pressure of 7kgf/cm2 is applied to the inside of the battery. A certain pressure exceeding 7kgf/cm2 may not cause leakage of the electrolyte.

However, it can be seen that when the press force is 300N, the average value of the leak pressure is about 3kgf/cm2 and the minimum value is about 2kgf/cm2, the latter of which does not satisfy the leak pressure requirement of 3kgf/cm2. This results in a poor sealing characteristic.

It can also be seen that when the press pressure is 10N, the average value of the leak pressure is about 2kgf/cm2 and the minimum value is about 1kgf/cm2, neither of which satisfies the leak pressure requirement of 3kgf/cm2. This results in a poor sealing characteristic.

It can also be seen that when the press pressure is 210N, the average value of the leak pressure is about 2.6kgf/cm2 and the minimum value is about 2kgf/cm2, neither of which satisfies the leak pressure requirement of 3kgf/cm2. This results in a poor sealing characteristic.

In this case, the reduction of the leak pressure under the press pressure exceeding 190N is caused by deformation of the cap plate due to an overly high press force, and thus, the reduction of the sealing force.

Thus, in the present invention, the sealing member is preferably pressed using the press force of 50N to 190N, and more preferably, 90N to 150N by the press device.

Accordingly, the present invention can provide a secondary battery having an electrolyte injection hole having a very excellent sealing characteristic.

The present invention can also provide a secondary battery having high productivity by eliminating need for a cap welding process.

The present invention can also provide a secondary battery capable of suppressing formation of a pin hole by eliminating need for a cap welding process.

Although a few embodiments of the present invention have been shown and described, it would be appreciated by those skilled in the art that changes may be made in these embodiments without departing from the principles of the invention, the scope of which is defined in the claims.

## Claims

1. A cap assembly (300) for a battery, the cap assembly having a cap plate (350),
wherein the cap plate includes an electrolyte injection hole (370) for receiving a sealing member (382), the sealing member comprising a cap (380) and a resin (381) coated on an outer circumference of the cap, wherein the electrolyte injection hole includes a tapered portion (371), and the tapered portion has a surface roughness of 1µm to 17µm.

2. The cap assembly of claim 1, wherein the tapered portion has a surface roughness of 5µm to 11µm.

3. The cap assembly of claim 1 or 2, wherein the electrolyte injection hole tapers from an upper surface of the cap plate to a lower surface thereof.

4. The cap assembly of claim 1, 2 or 3, wherein the tapered portion has a depth of between 37.5% and 62.5% of the thickness of the cap plate.

5. The cap assembly of any one of the preceding claims, wherein the cap plate has a thickness of between 0.7 and 1.0mm and/or wherein the tapered portion has an inner angle of 43 to 68° and/or wherein the tapered portion has a taper angle of 56 to 69° with respect to the lower surface of the cap plate; and/or wherein the electrolyte injection hole has an upper diameter of 1.1mm to 1.5mm and a lower diameter of 0.7mm to 1.1mm, such that the upper diameter is larger than the lower diameter.

6. The cap assembly of claim 1, 2 or 3, wherein the tapered portion of the electrolyte injection hole has a depth corresponding to 50% of the thickness of the cap plate, the thickness of the cap plate is 0.8mm, the upper diameter of the electrolyte injection hole is 1.3mm, and the lower diameter of the electrolyte injection hole is 0.9mm, and
the diameter of the electrolyte injection hole is formed such that the size of the electrolyte injection hole is reduced from the upper diameter to a point corresponding to the depth of the tapered portion.

7. The cap assembly of any one of the preceding claims, wherein the resin has a coating thickness of 1.75µm to 20µm.

8. The cap assembly of claim 7, wherein the resin has a coating thickness of 6µm to 10µm.

9. The cap assembly of any one of the preceding claims, wherein the resin is a polyimide resin, a fluorine resin, or a natural-rubber resin.

10. The cap assembly of any one of the preceding claims, wherein the cap has a ball shape.

11. The cap assembly of claim 10, wherein the cap has a diameter of between 0.9 and 1.3mm.

12. The cap assembly of any one of the preceding claims, wherein the cap comprises aluminum or an aluminum alloy.

13. A secondary battery having a cap assembly according to any one of the preceding claims.

14. A method of fabricating a secondary battery, comprising:
injecting an electrolyte into a bare cell through an electrolyte injection hole (370) in a cap assembly (300) according to many one of the preceding claims;
locating the sealing member (382) on the electrolyte injection hole; and
pressing the sealing member into the electrolyte injection hole using a press device.

15. The method of claim 14, wherein the sealing member is pressed into the electrolyte injection hole using a press force of 50N to 190N, or with a press force of 90N to 150N.

16. The method of claim 14 or 15, wherein the sealing member seals the electrolyte injection hole by a predetermined portion of the resin that is contacted with and pressed on the tapered portion of the electrolyte injection hole, wherein the predetermined portion of the resin contacted with and pressed on the tapered portion of the electrolyte injection hole has a coating thickness corresponding to 40 to 60% of the coating thickness prior to sealing the electrolyte injection hole.

17. The method of any one of claims 14 to 16, further comprising coating the periphery of the electrolyte injection hole including the sealing member with a UV curable layer.

## Patentansprüche

1. Deckelanordnung (300) für eine Batterie, wobei die Deckelanordnung eine Abdeckplatte (350) aufweist,
wobei die Abdeckplatte ein Elektrolyteinspritzloch (370) zur Aufnahme eines Verschließelements (382) besitzt, wobei das Verschließelement einen Stopfen (380) sowie ein auf einen Außenumfang des Stopfens aufgetragenes Harz (381) umfasst, wobei das Elektrolyteinspritzloch einen verjüngten Abschnitt (371) aufweist und der verjüngte Abschnitt eine Oberflächenrauheit von 1 µm bis 17 µm aufweist.

2. Deckelanordnung nach Anspruch 1 wobei der verjüngte Abschnitt eine Oberflächenrauheit von 5 µm bis 11 µm aufweist.

3. Deckelanordnung nach Anspruch 1 oder 2, wobei sich das Elektrolyteinspritzloch von einer oberen Fläche der Abdeckplatte hin zu einer unteren Fläche derselben verjüngt.

4. Deckelanordnung nach Anspruch 1, 2 oder 3, wobei der verjüngte Abschnitt eine Tiefe von zwischen 37,5% und 62,5% der Dicke der Abdeckplatte aufweist.

5. Deckelanordnung nach einem der vorstehenden Ansprüche, wobei die Abdeckplatte eine Dicke von zwischen 0,7 und 1,0 mm aufweist und/oder wobei der verjüngte Abschnitt einen Innenwinkel von 43 bis 68° aufweist und/oder wobei der verjüngte Abschnitt einen Verjüngungswinkel von 56 bis 69° gegenüber der unteren Fläche der Abdeckplatte aufweist; und/oder wobei das Elektrolyteinspritzloch einen oberen Durchmesser von 1,1 mm bis 1,5 mm und einen unteren Durchmesser von 0,7 bis 1,1 mm aufweist, derart, dass der obere Durchmesser größer ist als der untere Durchmesser.

6. Deckelanordnung nach Anspruch 1, 2 oder 3, wobei der verjüngte Abschnitt des Elektrolyteinspritzlochs eine Tiefe entsprechend 50% der Dicke der Abdeckplatte aufweist, die Dicke der Abdeckplatte 0,8 mm beträgt, der obere Durchmesser des Elektrolyteinspritzlochs 1,3 mm beträgt und der untere Durchmesser des Elektrolyteinspritzlochs 0,9 mm beträgt, und
der Durchmesser des Elektrolyteinspritzlochs so ausgebildet ist, dass sich die Größe des Elektrolyteinspritzlochs vom oberen Durchmesser zu einem Punkt entsprechend der Tiefe des verjüngten Abschnitts hin verringert.

7. Deckelanordnung nach einem der vorstehenden Ansprüche, wobei das Harz eine Schichtdicke von 1,75 µm bis 20 µm aufweist.

8. Deckelanordnung nach Anspruch 7, wobei das Harz eine Schichtdicke von 6 µm bis 10 µm aufweist.

9. Deckelanordnung nach einem der vorstehenden Ansprüche, wobei das Harz ein Polyimidharz, ein Fluorharz oder ein Naturkautschukharz ist.

10. Deckelanordnung nach einem der vorstehenden Ansprüche, wobei der Stopfen ballförmig ist.

11. Deckelanordnung nach Anspruch 10, wobei der Stopfen einen Durchmesser von zwischen 0,9 und 1,3 mm aufweist.

12. Deckelanordnung nach einem der vorstehenden Ansprüche, wobei der Stopfen Aluminium oder eine Aluminiumlegierung umfasst.

13. Sekundärbatterie mit einer Deckelanordnung nach einem der vorstehenden Ansprüche.

14. Verfahren zur Herstellung einer Sekundärbatterie, umfassend:
Einspritzen eines Elektrolyts in eine Rohzelle durch ein Elektrolyteinspritzloch (370) in einer Deckelanordnung (300) nach einem der vorstehenden Ansprüche;
Platzieren des Verschließelements (382) auf dem Elektrolyteinspritzloch; und
Einpressen des Verschließelements in das Elektrolyteinspritzloch unter Verwendung einer Pressvorrichtung.

15. Verfahren nach Anspruch 14, wobei das Verschließelement in das Elektrolyteinspritzloch unter Verwendung eine Presskraft von 50N bis 190N oder mit einer Presskraft von 90N bis 150N eingepresst wird.

16. Verfahren nach Anspruch 14 oder 15, wobei das Verschließelement das Elektrolyteinspritzloch mit einem vorbestimmten Abschnitt des Harzes verschließt, der mit dem verjüngten Abschnitt des Elektrolyteinspritzlochs in Kontakt gebracht und auf diesen gepresst wird, wobei der mit dem verjüngten Abschnitt des Elektrolyteinspritzlochs in Kontakt gebrachte und auf diesen gepresste vorbestimmte Abschnitt des Harzes eine Schichtdicke entsprechend 40 bis 60% der Schichtdicke vor dem Verschließen des Elektrolyteinspritzlochs aufweist.

17. Verfahren nach einem der Ansprüche 14 bis 16, ferner umfassend das Beschichten des Umfangs des Elektrolyteinspritzlochs einschließlich des Verschließelements mit einer UV-härtbaren Schicht.

## Revendications

1. Assemblage de capuchon (300) pour batterie, l'assemblage de capuchon ayant une plaque de capuchon (350),
dans lequel la plaque de capuchon comporte un trou d'injection d'électrolyte (370) destiné à recevoir un élément d'étanchéité (382), l'élément d'étanchéité comprenant un capuchon (380) et une résine (381) revêtant une circonférence extérieure du capuchon, le trou d'injection d'électrolyte comportant une partie biseautée (371) et la partie biseautée présentant une rugosité de surface de 1 µm à 17 µm.

2. Assemblage de capuchon selon la revendication 1, dans lequel la partie biseautée présente une rugosité de surface de 5 µm à 11 µm.

3. Assemblage de capuchon selon la revendication 1 ou 2, dans lequel le trou d'injection d'électrolyte est biseauté d'une surface supérieure de la plaque de capuchon vers une surface inférieure de celle-ci.

4. Assemblage de capuchon selon la revendication 1, 2 ou 3, dans lequel la partie biseautée présente une profondeur comprise entre 37,5 % et 62,5 % de l'épaisseur de la plaque de capuchon.

5. Assemblage de capuchon selon l'une quelconque des revendications précédentes, dans lequel la plaque de capuchon a une épaisseur comprise entre 0,7 et 1,0 mm et/ou dans lequel la partie biseautée présente un angle interne de 43 à 68° et/ou dans lequel la partie biseautée présente un angle de biseau de 56 à 69° par rapport à la surface inférieure de la plaque de capuchon ; et/ou dans lequel le trou d'injection d'électrolyte présente un diamètre supérieur de 1,1 mm à 1,5 mm et un diamètre inférieur de 0,7 mm à 1,1 mm, de telle sorte que le diamètre supérieur soit supérieur au diamètre inférieur.

6. Assemblage de capuchon selon la revendication 1, 2 ou 3, dans lequel la partie biseautée du trou d'injection d'électrolyte présente une profondeur correspondant à 50 % de l'épaisseur de la plaque de capuchon, l'épaisseur de la plaque de capuchon est de 0,8 mm, le diamètre supérieur du trou d'injection d'électrolyte est de 1,3 mm, et le diamètre inférieur du trou d'injection d'électrolyte est de 0,9 mm, et
le diamètre du trou d'injection d'électrolyte est formé de façon que la taille du trou d'injection d'électrolyte soit réduite du diamètre supérieur jusqu'en un point correspondant à la profondeur de la partie biseautée.

7. Assemblage de capuchon selon l'une quelconque des revendications précédentes, dans lequel la résine présente une épaisseur de revêtement de 1,75 µm à 20 µm.

8. Assemblage de capuchon selon la revendication 7, dans lequel la résine présente une épaisseur de revêtement de 6 µm à 10 µm.

9. Assemblage de capuchon selon l'une quelconque des revendications précédentes, dans lequel la résine est une résine de polyimide, une résine de fluor ou une résine de caoutchouc naturel.

10. Assemblage de capuchon selon l'une quelconque des revendications précédentes, dans lequel le capuchon présente la forme d'une bille.

11. Assemblage de capuchon la revendication 10, dans lequel le capuchon a un diamètre compris entre 0,9 et 1,3 mm.

12. Assemblage de capuchon selon l'une quelconque des revendications précédentes, dans lequel le capuchon comprend de l'aluminium ou un alliage d'aluminium.

13. Batterie secondaire comportant un assemblage de capuchon selon l'une quelconque des revendications précédentes.

14. Procédé de fabrication d'une batterie secondaire consistant à :
injecter un électrolyte dans une pile nue à travers un trou d'injection d'électrolyte (370) ménagé dans un assemblage de capuchon (300) selon l'une quelconque des revendications précédentes ;
positionner l'élément d'étanchéité (382) sur le trou d'injection d'électrolyte ; et
comprimer l'élément d'étanchéité à l'intérieur du trou d'injection d'électrolyte au moyen d'un dispositif de compression.

15. Procédé selon la revendication 14, dans lequel l'élément d'étanchéité est comprimé à l'intérieur du trou d'injection d'électrolyte au moyen d'une force de compression de 50 N à 190 N, ou avec une force de compression de 90 N à 150 N.

16. Procédé selon la revendication 14 ou 15, dans lequel l'élément d'étanchéité ferme de manière étanche le trou d'injection d'électrolyte au moyen d'une partie prédéterminée de la résine qui est mise en contact avec, et comprimée sur, la partie biseautée du trou d'injection d'électrolyte, dans lequel la partie prédéterminée de la résine mise en contact avec, et comprimée sur, la partie biseautée du trou d'injection d'électrolyte présente une épaisseur de revêtement correspondant à 40 à 60 % de l'épaisseur de revêtement avant la fermeture hermétique du trou d'injection d'électrolyte.

17. Procédé selon l'une quelconque des revendications 14 à 16, consistant en outre à revêtir la périphérie du trou d'injection d'électrolyte, y compris l'élément d'étanchéité, d'une couche durcissant aux UV.
